# EUROPEAN PATENT APPLICATION

(11) **EP 1 690 766 A1**
(43) Date of publication of application: **16.08.2006**
(21) Application number: 04793206.6
(22) Date of filing: 29.10.2004
(51) Int. Cl.: B60T 8/58

(54) **ANTI-LOCK BRAKE CONTROL DEVICE AND ANTI-LOCK BRAKE SYSTEM HAVING THE ANTI-LOCK BRAKE CONTROL DEVICE**

(30) Priority: 29.10.2003 JP 2003368267
(71) Applicant: Bosch Corporation, Shibuya-ku Tokyo 150-8360 (JP)
(72) Inventor: OGAWA, Takahiro c/o BOSCH CORPORATION, Yokosuka-shi, Kanagawa 2378586 (JP)
(74) Representative: Grünecker, Kinkeldey, Stockmair & Schwanhäusser Anwaltssozietät
(86) International application number: PCT/JP2004/016098
(87) International publication number: WO 2005/039947

(57) **Abstract**

In an anti-lock brake system of a brake system including an interlocking brake device, the present invention reduces at a low cost the discomfort in brake manipulation feeling of a driver which is generated attributed to braking which exceeds the brake manipulation feeling at the time of operating the interlocking brake device. A cylinder pressure (symbol CB) of a second front wheel cylinder 136 is controlled such that speed difference between a vehicle body speed (symbol ST) and a vehicle wheel speed (symbol F) of a front wheel 131 becomes equal to or less than a fixed speed difference due to an open/close control of a holding valve 24 and an open-close control of a pressure reducing valve 25. With respect to a cylinder pressure (symbol RW) of a rear wheel cylinder 234, since an open control and a close control of a holding valve 21 are repeatedly performed (symbol EV) at a predetermined cycle, a sharp pressure increase of a brake working liquid pressure (symbol RM) in a rear master cylinder 204 is gradually pressurized in a distributed manner at a predetermined cycle.

## Description

### Technical Field

The present invention relates to an anti-lock brake control device of an automobile having two or more wheels and a motorcycle, and an anti-lock brake system which includes such an anti-lock brake control device.

### Background Art

As a vehicle-use brake control device of a motorcycle or the like, there has been known an anti-lock brake system (ABS) which can prevent a phenomenon in which at the time of performing rapid braking by applying a braking force to wheels or at the time of performing braking on a slippery road surface, a vehicle slips due to locking of the wheels and hence, a braking distance of a vehicle is elongated or control of the vehicle in the advancing direction by steering becomes no more possible. The anti-lock brake system performs brake control such that when the braking is performed by a predetermined brake manipulation, a rotational speed of the wheels at the time of performing braking is detected, and pressurizing and depressurizing control of a cylinder pressure of a wheel cylinder which constitutes a braking force applying means is performed based on the rotational speed thus preventing the wheel from being locked.

To be more specific, when the wheel tends to be locked, control which holds each cylinder pressure by closing a holding solenoid valve of each wheel cylinder, control which reduces a brake working liquid pressure to each wheel cylinder by opening a pressure reducing solenoid valve provided to a communication passage between each wheel cylinder and a reservoir thus returning a portion of a brake working liquid from a master cylinder which is supplied to the wheel cylinder to the reservoir, and control which pressurizes the brake working liquid pressure to each wheel cylinder by the brake working liquid from the master cylinder which is supplied to the wheel cylinder by closing the pressure reducing solenoid valve and by opening the holding solenoid valve, are selectively performed in response to the wheel rotational speed thus preventing the wheel from being locked. Further, the brake working liquid returned to the reservoir is forcibly supplied to the master cylinder under pressure by a pump.

Here, in the motorcycle-use anti-lock brake system of a brake system of a motor cycle, for example, there has been known an anti-lock brake system which includes the structure which allows the operation of a wheel brake which is mounted on the front wheel even when either one of a front brake manipulation lever and a rear brake manipulation lever is manipulated, that is, a so-called interlocking brake device (for example, see Patent document 1). By manipulation the rear brake manipulation lever, a front brake and a rear brake can be substantially simultaneously operated thus simplifying the brake manipulation in the driving manipulation. Further, the general motorcycle-use anti-lock brake system includes a master cylinder for a front brake and a master cylinder for a rear brake.

In the above-mentioned motorcycle-use anti-lock brake system which includes the interlocking brake device, two front wheel cylinders are provided to a front wheel. Here, assuming these two front wheel cylinders as the first front wheel cylinder and the second front wheel cylinder, a brake working liquid of the master cylinder for the front brake is supplied to the first front wheel cylinder of the front wheel and a brake working liquid of the master cylinder for the rear brake is supplied to a rear wheel cylinder of a rear wheel and the second front wheel cylinder of the front wheel. Accordingly, at the time of performing anti-lock brake control, there exists a possibility that the following unnatural braking is generated.

For example, assume that the front wheel tends to be locked in a state that braking is applied to the front wheel and the rear wheel by manipulating only the rear brake manipulation lever, and the anti-lock brake control is applied to the front brake. First of all, due to the anti-lock brake control, a pressure holding valve of the second front wheel cylinder is closed and hence, the communication of a brake working liquid from the master cylinder for the rear brake to the second front wheel cylinder is interrupted whereby a cylinder pressure of the second front wheel cylinder is held such that the cylinder pressure is no more pressurized. Further, in a state that the cylinder pressure of the second front wheel cylinder is held, a pressure reducing valve of the second front wheel cylinder is subjected to open control so as to reduce the cylinder pressure of the second front wheel cylinder and hence, the brake working liquid in the second front wheel cylinder is which is returned to a reservoir whereby the cylinder pressure of the second front wheel cylinder is reduced. The brake working liquid returned to the reservoir is forcibly supplied to the master cylinder for the rear brake under pressure by the pump to prevent the shortage of the brake working liquid to the master cylinder for the rear brake.

Then, to the rear wheel cylinder, in addition to the brake working liquid pressure generated by the master cylinder for the rear brake, the pressure of the brake working liquid which is supplied forcibly under pressure to the master cylinder for the rear brake by the pump is applied and hence, a braking force which a driver can not expect is eventually applied to the rear wheel. That is, when the anti-lock brake control is applied to the front wheel in a state that the driver holds a manipulation state of the rear brake manipulation lever in a fixed state, the stronger braking force is applied to the rear wheel. Accordingly, the braking force which is stronger than the brake manipulation feeling of the driver is applied to the rear wheel and hence, the anti-lock brake control is also applied to the rear wheel. Accordingly, the braking greater than the brake manipulation feeling of the driver is performed and hence, the driver may feel the discomfort in his/her brake manipulation feeling.

As one example of the prior art which overcomes such a drawback, there has been known a technique in which a delay valve is arranged in a brake working liquid path between the master cylinder for the rear brake and the second front wheel cylinder (for example, see Paten document 2) . The brake working liquid pressure from the master cylinder for the rear brake is transmitted to the second front wheel cylinder with delay of a fixed time by the delay valve and, at the same time, when the anti-lock brake control is applied to the front wheel, the cylinder pressure in the second front wheel cylinder is reduced with delay of a fixed time whereby, the discomfort in brake manipulation feeling which the driver feels attributed to the applying of the braking exceeding the brake manipulation feeling of the driver can be reduced.

Patent document 1: JP-A-10-175533
Patent document 2: JP-A-2002-37043

### Disclosure of the Invention

### Problems to be Solved by the Invention

However, in the above-mentioned prior art, since the delay valve is an extremely expensive part, there arises a drawback that a cost of the anti-lock brake system is largely pushed up.
The present invention has been made under such circumstances and it is an object of the present invention to realize at a low cost the reduction of the discomfort in brake manipulation feeling generated attributed to the applying of braking which exceeds the brake manipulation feeling of the driver at the time of operating an interlocking brake device in an anti-lock brake system of a brake system including an interlocking brake device.

### Means for Solving the Problems

To achieve the above-mentioned object, a first aspect of the present invention is directed to an anti-lock brake control device which includes a first brake control means which is arranged in a first brake system, a second brake control means which is arranged in a second brake system, and a control device which controls the first brake control means and the second brake control means, wherein in a state that the first brake control means and the second brake control means are in an operating state and, at the same time, the first brake control means performs anti-lock brake control, a brake working liquid pressure which is transmitted to the second brake control means is intermittently pressurized by the control device.

Accordingly, it is possible to realize at a low cost the reduction of the discomfort in brake manipulation feeling of a driver which is generated attributed to the applying of the braking which exceeds the brake manipulation feeling of the driver at the time of operating the interlocking brake device.

A second aspect of the present invention is directed to the anti-lock brake control device in the first aspect of the present invention which is further characterized in that the brake working liquid pressure which is intermittently pressurized is gradually pressurized in a distributed manner.

A third aspect of the present invention is directed to the anti-lock brake control device in either the first aspect or the second aspect of the present invention which is further characterized in that the intermittent pressurizing of the brake working liquid pressure is performed within a predetermined time in which at least the first brake control means performs the anti-lock brake control.

A fourth aspect of the present invention is directed to the anti-lock brake control device in the third aspect of the present invention which is further characterized in that the anti-lock brake control device is provided with a liquid pressure unit which includes a control valve which is operated in response to a control signal from the control device along with an operation of a manipulation elements which are arranged in the first brake system and the second brake system, and the predetermined time is a time from a point of time that the anti-lock brake control is started to a point of time that the speed difference between a vehicle body speed and a wheel speed of a wheel which is to be braked in the second brake system is set to a value below a predetermined speed difference.

A fifth aspect of the present invention is directed to an anti-lock brake control device which includes a first brake force applying means which applies a brake force to a first wheel, a second brake force applying means which applies a brake force to a second wheel, a first brake working liquid pressure path which transmits a brake working liquid pressure of a master cylinder which is increased or decreased by operating a manipulation element to the first brake force applying means, a second brake working liquid pressure path which transmits the brake working liquid pressure of the master cylinder to the second brake force applying means by the operation of the manipulation element, a first holding valve which is capable of opening and closing the first brake working liquid pressure path, a second holding valve which is capable of opening and closing the second brake working liquid pressure path, a first pressure reducing valve which is capable of opening and closing a communication path between the first brake force applying means and a reservoir of the master cylinder, a second pressure reducing valve which is capable of opening and closing a communication path between the second brake force applying means and the reservoir, a brake working liquid recovering means which returns the brake working liquid in the reservoir to the master cylinder after pressurizing the brake working liquid, and a control device which controls operations of the first holding valve, the second holding valve, the first pressure reducing valve, the second pressure reducing valve and the brake working liquid recovering means, wherein during a period in which anti-lock brake control is applied to the first wheel or the second wheel, due to the control device, the second holding valve or the first holding valve which is provided to the brake working liquid pressure path for transmitting the brake working liquid pressure to the second wheel or the first wheel is intermittently opened and closed.

A sixth aspect of the present invention is directed to the anti-lock brake control device in the first aspect or the fifth aspect of the present invention which is further characterized in that the anti-lock brake control device is mounted on a two-wheeled vehicle which includes an interlocking brake device which is capable of transmitting the brake working liquid pressure to both of the front wheel and the rear wheel using one manipulation element.

The seventh aspect of the present invention is directed to an anti-lock brake system which includes the anti-lock brake control device described in any one of first aspect to sixth aspect of the present invention.

### Best Mode for Carrying Out the Invention

Hereinafter, embodiments of the present invention are explained in conjunction with drawings.
First of all, a motorcycle-use anti-lock brake system according to the present invention is explained.

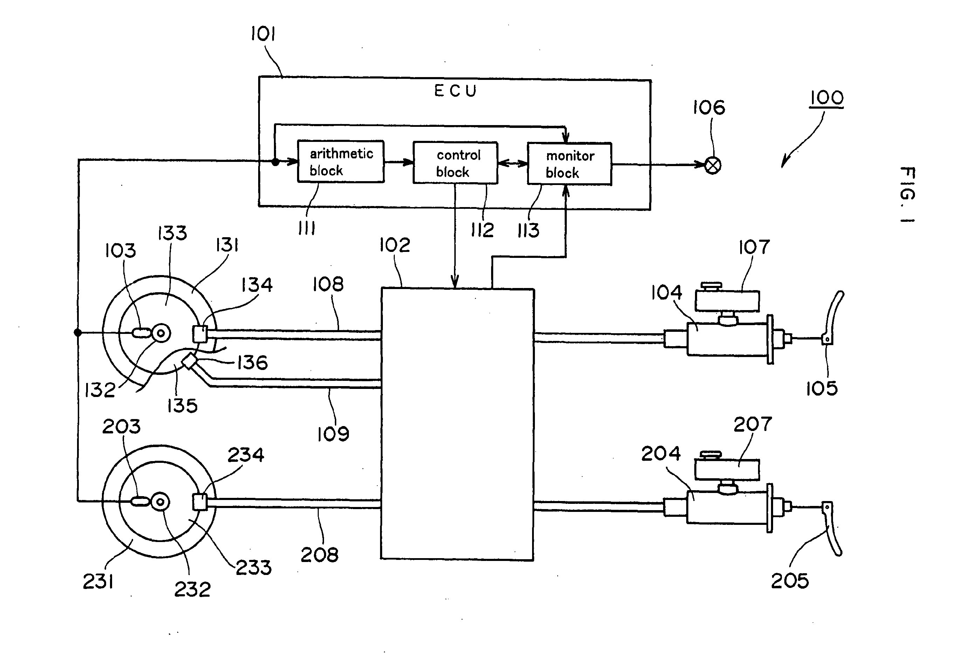

Fig. 1 is a schematic block diagram showing the system constitution of the motorcycle-use anti-lock brake system according to the present invention.
The motorcycle-use anti-lock brake system 100 is constituted of, as the basic constitution thereof, a front-wheel wheel speed sensor 103, a rear-wheel wheel speed sensor 203, an ECU (electronic control unit) 101 which constitutes "a control device", a hydraulic unit 102, a front master cylinder 104, a rear master cylinder 204 (a master cylinder), a first front wheel cylinder 134 which constitutes a brake force applying means, a second front wheel cylinder 136 which also constitutes a brake force applying means (a first wheel cylinder which constitutes a first brake force applying means) and a rear wheel cylinder 234 which also constitutes the brake force applying means (a second wheel cylinder which constitutes a second brake force applying means).

The front-wheel wheel speed sensor 103 is a sensor which generates an AC signal having frequency proportional to a rotational speed of a front wheel 131 upon detection of the tooth of a front wheel gear 132 which is rotated together with the front wheel 131 (the first wheel) (or an element corresponding to a tooth of the front wheel gear such as a magnetic encoder or the like) or a sensor equivalent to such a sensor. Further, in the same manner, the rear-wheel wheel speed sensor 203 is a sensor which generates an AC signal having frequency proportional to a rotational speed of a rear wheel 231 upon detection of a tooth of a rear wheel gear 232 which is rotated together with the rear wheel 231 (the second wheel) or a sensor equivalent to such a sensor.

The ECU 101 includes an arithmetic block 111 which has a function of calculating wheel speeds of the front wheel 131 and the rear wheel 231 in response to inputting of the AC signals transmitted from the front-wheel wheel speed sensor 103 and the rear-wheel wheel speed sensor 203 and a function of calculating a slip ratio, a wheel acceleration/deceleration, a vehicle body speed and the like based on the calculated wheel speeds. Further, the ECU 101 includes a control block 112 having a control function of generating control commands with respect to a brake pressure by logically combining the slip ratio, the wheel acceleration/deceleration and the like which the arithmetic block 111 calculates and are inputted to the control block 112 and transmitting the control commands to the hydraulic unit 102. Further, the ECU 101 includes a monitor block 113 having a system monitor function of performing a function check and the monitoring of the respective constitutional parts and the whole system and, when a defect occurs, stopping the anti-lock brake function after alarming a driver with an alarm lamp 106, an alarm beeper not shown in the drawing or the like and, thereafter, performing the usual brake operation.

The hydraulic unit 102 is arranged between the front master cylinder 104 and the rear master cylinder 204, and the first front wheel cylinder 134, the second front wheel cylinder 136 and the rear wheel cylinder 234. The first front wheel cylinder 134 is arranged on a front brake disk 133 which constitutes "a front-wheel brake disk", and the second front wheel cylinder 136 is arranged on a front brake disk 135 which constitutes another "front-wheel brake disk". The rear wheel cylinder 234 is arranged on a rear brake disk 233 which constitutes "a rear-wheel brake disk".

To the first front wheel cylinder 134, a brake working liquid pressure of the front master cylinder 104 which is increased or decreased due to a brake manipulation using a front brake lever 105 which constitutes "a front brake manipulation element" is transmitted by way of a first front brake working liquid pressure path 108. To the rear wheel cylinder 234, a brake working liquid pressure of the rear master cylinder 204 which is increased or decreased due to a brake manipulation using a rear brake lever 205 which constitutes "a rear brake manipulation element" is transmitted by way of a rear brake working liquid pressure path 208 (a second brake working liquid pressure path).
Further, to the second front wheel cylinder 136, the brake working liquid pressure of the rear master cylinder 204 is transmitted by way of a second front brake working liquid pressure path 109 (a first brake working liquid pressure path) .

Upon the brake manipulation using the front brake lever 105, a cylinder pressure of the first front wheel cylinder 134 is elevated and hence, the front wheel brake is operated. On the other hand, upon the brake manipulation using the rear brake lever 205, a cylinder pressure of the rear wheel cylinder 234 is elevated and hence, the rear wheel brake is operated and, at the same time, a cylinder pressure of the second front wheel cylinder 136 is elevated and hence, the front wheel brake is also simultaneously operated. The hydraulic unit 102, apart from the increase or the decrease of the brake pressure to the front brake disk 133 by the brake manipulation using the front brake lever 105, and the brake pressure to the brake disk 233 by the brake manipulation using the rear brake lever 205, increases or decreases the brake pressures of the front wheel 131 and the rear wheel 231 upon receiving anti-lock brake control commands from the ECU 101.

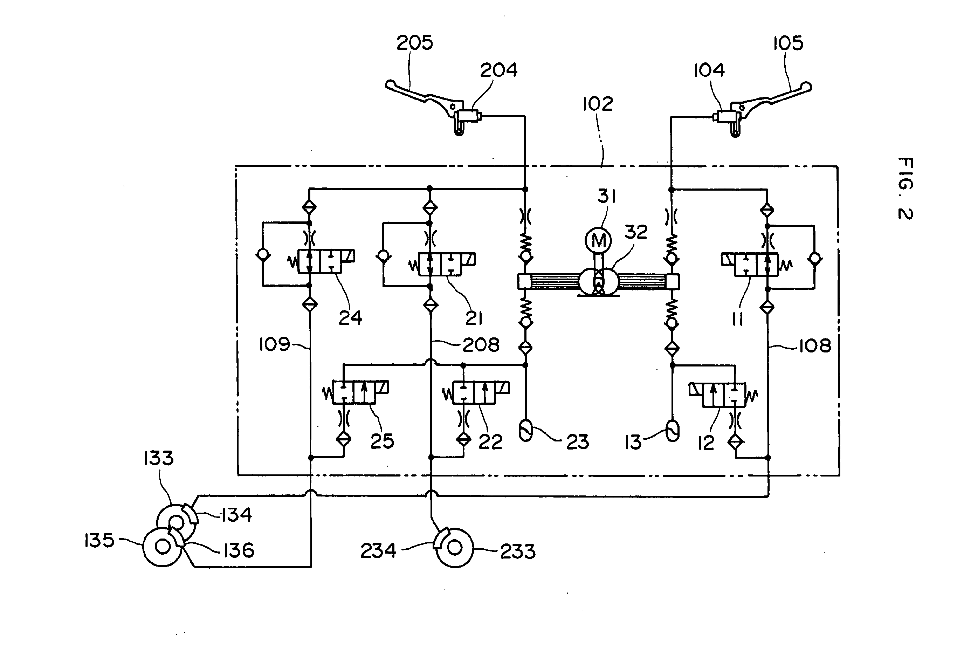

Fig. 2 is a schematic constitutional view of the hydraulic unit 102.
The hydraulic unit 102 includes a holding valve 11 which constitutes "a first front brake holding valve" capable of opening and closing the first front brake working liquid pressure path 108, and a pressure reducing valve 12 which constitutes "a first front brake pressure reducing valve" capable of opening and closing a communication path between the first front wheel cylinder 134 and the reservoir 13 of the front master cylinder 104. The holding valve 11 is a normally-open (opened at a usual time) solenoid valve, and the pressure reducing valve 12 is a normally-closed (closed at a usual time) solenoid valve.

To the first front wheel cylinder 134, in a state that the pressure reducing valve 12 is closed and the holding valve 11 is opened, the increase or decrease of the brake working liquid pressure of the front master cylinder 104 is directly transmitted. Further, in a state that the pressure reducing valve 12 is closed and the holding valve 11 is also closed, irrespective of the brake working liquid pressure of the front master cylinder 104, the pressure of the first front wheel cylinder 134 is held, while in a state that the pressure reducing valve 12 is opened with the holding valve 11 held in a closed state, irrespective of the brake working liquid pressure of the front master cylinder 104, the brake working liquid of the first front wheel cylinder 134 flows into the reservoir 13 and hence, the pressure of the first front wheel cylinder 134 is decreased. In the reservoir 13, the brake working liquid of the first front wheel cylinder 134 whose pressure is decreased due to the pressure reducing valve 12 is temporarily stored.

The hydraulic unit 102 includes a holding valve 21 which constitutes "a rear brake holding valve (a second holding valve)" capable of opening and closing the rear brake working liquid pressure path 208, and a pressure reducing valve 22 which constitutes "a rear brake pressure reducing valve (a second pressure reducing valve)" capable of opening and closing a communication path between the rear wheel cylinder 234 and the reservoir 23 of the rear master cylinder 204. The holding valve 21 is a normally-open (opened at a usual time) solenoid valve, and the pressure reducing valve 22 is a normally-closed (closed at a usual time) solenoid valve.

To the rear wheel cylinder 234, in a state that the pressure reducing valve 22 is closed and the holding valve 21 is opened, the increase or decrease of the brake working liquid pressure of the rear master cylinder 204 is directly transmitted. Further, in a state that the pressure reducing valve 22 is closed and the holding valve 21 is also closed, irrespective of the brake working liquid pressure of the rear master cylinder 204, the cylinder pressure of the rear wheel cylinder 234 is held, while in a state that the pressure reducing valve 22 is opened with the holding valve 21 held in a closed state, irrespective of the brake working liquid pressure of the rear master cylinder 204, the brake working liquid of the rear wheel cylinder 234 flows into the reservoir 23 and hence, the cylinder pressure of the rear wheel cylinder 234 is decreased. In the reservoir 23, the brake working liquid of the rear wheel cylinder 234 whose pressure is decreased due to the pressure reducing valve 22 is temporarily stored.

The hydraulic unit 102 includes a holding valve 24 which constitutes "a second front brake holding valve (a first holding valve)" capable of opening and closing the second front brake working liquid pressure path 109, and a pressure reducing valve 25 which constitutes "a second front brake pressure reducing valve (a first pressure reducing valve) " capable of opening and closing a communication path between the second front wheel cylinder 136 and the reservoir 23 of the rear master cylinder 204. The holding valve 24 is a normally-open (opened at a usual time) solenoid valve, and the pressure reducing valve 25 is a normally-closed (closed at a usual time) solenoid valve.

To the second front wheel cylinder 136, in a state that the pressure reducing valve 25 is closed and the holding valve 24 is opened, the increase or decrease of the brake working liquid pressure of the rear master cylinder 204 is directly transmitted. Further, in a state that the pressure reducing valve 25 is closed and the holding valve 24 is also closed, irrespective of the brake working liquid pressure of the rear master cylinder 204, the cylinder pressure of the second front wheel cylinder 136 is held, while in a state that the pressure reducing valve 25 is opened with the holding valve 24 held in a closed state, irrespective of the brake working liquid pressure of the rear master cylinder 204, the brake working liquid of the second front wheel cylinder 136 flows into the reservoir 23 and hence, the cylinder pressure of the second front wheel cylinder 136 is decreased. In the reservoir 23, the brake working liquid of the second front wheel cylinder 234 whose pressure is decreased due to the pressure reducing valve 25 is temporarily stored.

The hydraulic unit 102 includes a circulating pump 32 which constitutes "a brake working liquid recovering means" and returns the brake working liquid in the reservoir 13 of the front master cylinder 104 to the reservoir tank 107 (Fig. 1) of the front master cylinder 104 under pressure and, at the same time, returns the brake working liquid in the reservoir 23 of the rear master cylinder 204 to a reservoir tank 207 (Fig. 1) of the rear master cylinder 204 under pressure, and a DC motor 31 which constitutes a drive power source of the circulating pump 32. The DC motor 31 operates the circulating pump 32 by rotating an eccentric cam. The circulating pump 32, at the time of performing the anti-lock brake control, sucks the brake working liquid in the reservoir 13 and returns the brake working liquid to the reservoir tank 107 (Fig. 1) of the front master cylinder 104 under pressure and, at the same time, sucks the brake working liquid in the reservoir 23 and returns the brake working liquid to the reservoir tank 207 (Fig. 1) of the rear master cylinder 207 under pressure.

Then, six solenoid valves consisting of the holding valve 11, the holding valve 21, the holding valve 24, the pressure reducing valve 12, the pressure reducing valve 22 and the pressure reducing valve 25, and the DC motor 31 are controlled by the control block 112 (Fig. 1) of the ECU 101 which constitutes the "the anti-lock brake control device".
The ECU 101 performs the anti-lock brake control with respect to the front wheel 131 and the rear wheel 231 as follows. That is, for preventing the front wheel 131 from being locked, the ECU 101 performs the open/close control of the holding valve 11 and the pressure reducing valve 12 so as to adjust the cylinder pressure of the first front wheel cylinder 134 and, at the same time, performs the open/close control of the holding valve 24 and the pressure reducing valve 25 so as to adjust the cylinder pressure of the second front wheel cylinder 136. Further, for preventing the rear wheel 231 from being locked, the ECU 101 also performs the open/close control of the holding valve 21 and the pressure reducing valve 22 so as to adjust the cylinder pressure of the rear wheel cylinder 234.

In the motorcycle-use anti-lock brake system 100 having such a constitution, at the time of performing the usual brake control, all solenoid valves are in a de-energized state. That is, the holding valve 11, the holding valve 21 and the holding valve 24 assume an open state, and the pressure reducing valve 12, the pressure reducing valve 22, and the pressure reducing valve 25 assume a closed state. The brake working liquid pressure which is generated by the front master cylinder 104 at the time of performing the brake manipulation using the front brake lever 105 is transmitted to the first front wheel cylinder 134 via the first front brake working liquid pressure path 108. Further, when the brake releasing is performed due to the brake manipulation using the front brake lever 105, the brake working liquid of the first front wheel cylinder 134 returns to the front master cylinder 104 via the first front brake working liquid pressure path 108.

The brake working liquid pressure which is generated by the rear master cylinder 204 at the time of performing the brake manipulation using the rear brake lever 205 is transmitted to the rear wheel cylinder 234 via the rear brake working liquid pressure path 208 and, at the same time, the brake working liquid pressure is transmitted to the second front wheel cylinder 136 via the second front brake working liquid pressure path 109. Further, when the brake releasing is performed due to the brake manipulation using the rear brake lever 205, the brake working liquid of the rear wheel cylinder 234 returns to the rear master cylinder 204 via the rear brake working liquid pressure path 208, and the brake working liquid in the second front wheel cylinder 136 returns to the rear master cylinder 204 via the second front brake working liquid pressure path 109.

The ECU 101, at the time of performing the anti-lock brake control, performs the following control so as to prevent the front wheel 131 and the rear wheel 231 from being locked. First of all, the control performed by the ECU 101 at the time of performing the brake manipulation using only the front brake lever 105 is explained.

When the front wheel 131 tends to be locked at the time of performing the brake manipulation using the front brake lever 105, in response to the control from the ECU 101, the holding valve 11 and the pressure reducing valve 12 are energized. The holding valve 11 assumes a closed state from a normally open state and the pressure reducing valve 12 assumes an open state from a normally closed state. Since the holding valve 11 is closed and the pressure reducing valve 12 is opened, the brake working liquid pressure of the front master cylinder 104 and the cylinder pressure of the first front wheel cylinder 134 are interrupted from each other. The cylinder pressure of the first front wheel cylinder 134 is reduced since the brake working liquid is temporality stored in the reservoir 13 via the pressure reducing valve 12. Here, the DC motor 31 is also energized simultaneously and hence, the brake working liquid which is temporarily stored in the reservoir 13 is sucked and returned to the front master cylinder 104 by the circulating pump 32. Then, the cylinder pressure of the first front wheel cylinder 134 is subject to the pressure reducing control in a state that the cylinder pressure of the first front wheel cylinder 134 is completely separated from the brake working liquid pressure of the front master cylinder 104.

When the cylinder pressure of the first front wheel cylinder 134 assumes an optimum value, in response to the control from the ECU 101, the pressure reducing valve 12 is de-energized and hence, the pressure reducing valve 12 assumes a closed state. Then, due to the closing of the pressure reducing valve 12, the cylinder pressure of the first front wheel cylinder 134 and the reservoir 13 are interrupted from each other and hence, the cylinder pressure of the first front wheel cylinder 134 is held. That is, since both of the holding valve 11 and the pressure reducing valve 12 are closed, the cylinder pressure of the first front wheel cylinder 134 assumes the brake working liquid pressure which is controlled and held by the ECU 101 and assumes an independent state separated from the brake working liquid pressure of the front master cylinder 104 pressurized by the brake manipulation using the front brake lever 105.

Then, when it is necessary to increase the cylinder pressure of the first front wheel cylinder 134, in response to the control signal from the ECU 101, the holding valve 11 is de-energized and hence, the holding valve 11 assumes an open state. Due to the opening of the holding valve 11, the brake working liquid pressure of the front master cylinder 104 and the cylinder pressure of the first front wheel cylinder 134 are communicated with each other and hence, a state which is equal to a state at the time of performing the usual braking is established. That is, due to the brake working liquid pressure of the front master cylinder 104 which is pressurized by the brake manipulation using the front brake lever 105, the cylinder pressure of the first front wheel cylinder 134 is increased.

Next, the control performed by the ECU 101 at the time of performing the brake manipulation using only the rear brake lever 205 is explained.
As mentioned previously, the brake working liquid pressure of the rear master cylinder 204 which is increased or decreased due to the brake manipulation using the rear brake lever 205 is transmitted to the rear wheel cylinder 234 via the rear brake working liquid pressure path 208 and, at the same time, is transmitted to the second front wheel cylinder 136 via the second front brake working liquid pressure path 109. Accordingly, due to the brake manipulation using the rear brake lever 205, the cylinder pressure of the rear wheel cylinder 234 is elevated to operate the rear wheel brake and, at the same time, the cylinder pressure of the second front wheel cylinder 136 is elevated to also operate the front wheel brake simultaneously.

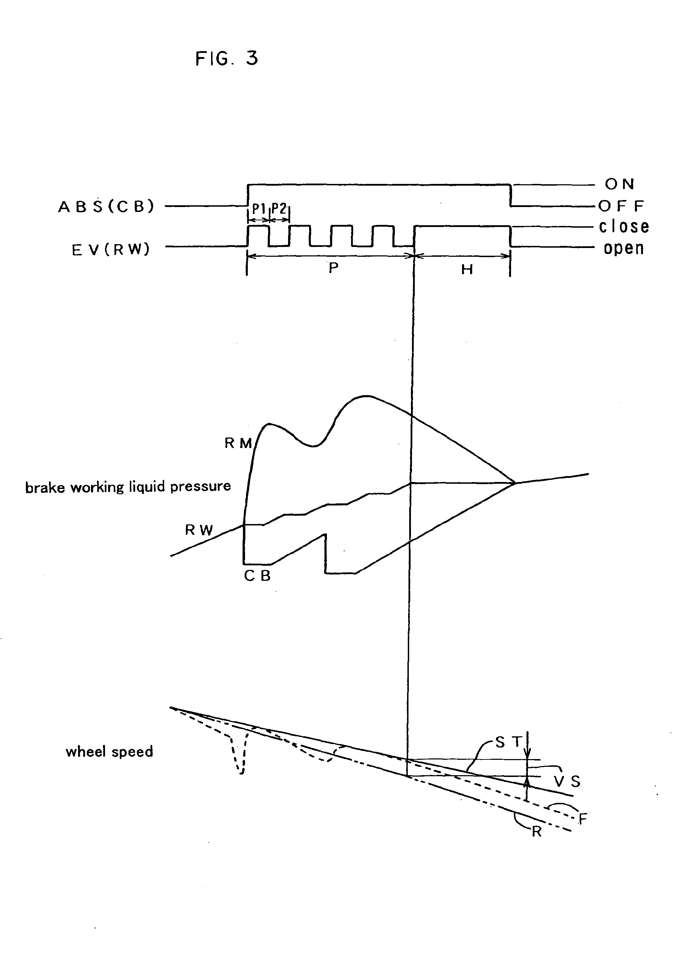

Accordingly, first of all, the anti-lock brake control of the second front wheel cylinder 136 by the ECU 101 when the front wheel 131 tends to be locked in a state that the front wheel brake and the rear wheel brake are simultaneously operated due to the brake manipulation using the rear brake lever 205 is explained in conjunction with Fig. 2 succeedingly and also in conjunction with Fig. 3 when necessary.

Fig. 3 is a timing chart of anti-lock brake control and views showing change curves of brake working liquid pressures of respective parts and a wheel speed curve with respect to a vehicle body speed in a first embodiment when a front wheel 131 tends to be locked in the state that the front wheel brake and the rear wheel brake are simultaneously operated.
Symbol ABS (CB) in the timing chart indicates timing of the anti-lock brake control with respect to the second front wheel cylinder 136, wherein an ON state is a state in which the anti-lock brake control is performed with respect to the second front wheel cylinder 136. Further, symbol EV (RW) indicates open/close control timing of the holding valve 21 which is arranged in the rear brake working liquid pressure path 208, wherein the rear master cylinder 204 and the rear wheel cylinder 234 are communicated with each other in an open state.

With respect to the change curves of the brake working liquid pressures, the curve represented by symbol RW indicates the cylinder pressure of the rear wheel cylinder 234, the curve represented by symbol RM indicates the brake working liquid pressure of the rear master cylinder 204, and the curve represented by symbol CB indicates the cylinder pressure of the second front wheel cylinder 136.

To explain the wheel speed curves with respect to the vehicle body speed, a straight line represented by symbol ST indicates the vehicle body speed, the curve represented by symbol F indicates the wheel speed of the front wheel 131 and the curve represented by symbol R indicates the wheel speed of the rear wheel 231.

When the front wheel 131 tends to be locked at the time of performing the brake manipulation using the rear brake lever 205, in response to the control signal from the ECU 101, the holding valve 24 and the pressure reducing valve 25 are energized. The holding valve 24 assumes a closed state from a normally open state and the pressure reducing valve 25 assumes an open state from a normally closed state. Since the holding valve 24 is closed and the pressure reducing valve 25 is opened, the brake working liquid pressure of the rear master cylinder 204 and the cylinder pressure of the second front wheel cylinder 136 are interrupted from each other. The cylinder pressure of the second front wheel cylinder 136 is reduced since the brake working liquid is temporarily stored in the reservoir 23 via the pressure reducing valve 25.
Here, the DC motor 31 is also energized simultaneously and hence, the brake working liquid which is temporarily stored in the reservoir 23 is sucked and returned to the rear master cylinder 204 by the circulating pump 32. Then, the cylinder pressure of the second front wheel cylinder 136 is subject to the pressure reducing control in a state that the cylinder pressure of the second front wheel cylinder 136 is completely separated from the brake working liquid pressure of the rear master cylinder 204.

When the cylinder pressure of the second front wheel cylinder 136 assumes an optimum value, in response to the control signal from the ECU 101, the pressure reducing valve 25 is de-energized and hence, the pressure reducing valve 25 assumes a closed state. Then, due to the closing of the pressure reducing valve 25, the cylinder pressure of the second front wheel cylinder 136 and the reservoir 23 are interrupted from each other and hence, the cylinder pressure of the second front wheel cylinder 136 is held. That is, since both of the holding valve 24 and the pressure reducing valve 25 are closed, the cylinder pressure of the second front wheel cylinder 136 assumes the brake working liquid pressure which is controlled and held by the ECU 101 and assumes an independent state separated from the brake working liquid pressure of the rear master cylinder 204 pressurized by the brake manipulation using the rear brake lever 205.

Then, when it is necessary to increase the cylinder pressure of the second front wheel cylinder 136, in response to the control signal from the ECU 101, the holding valve 24 is de-energized and hence, the holding valve 24 assumes an open state. Due to the opening of the holding valve 24, the brake working liquid pressure of the rear master cylinder 204 and the cylinder pressure of the second front wheel cylinder 136 are communicated with each other and hence, a state which is equal to a state at the time of performing the usual braking is established. That is, due to the brake working liquid pressure of the rear master cylinder 204 which is pressurized by the brake manipulation using the rear brake lever 205, the cylinder pressure of the second front wheel cylinder 136 is increased.

In this manner, the ECU 100, at the time of performing the brake manipulation using the rear brake lever 205, controls the cylinder pressure of the second front wheel cylinder 136 by performing the open/close control of the holding valve 24 and the pressure reducing valve 25 so as to prevent the front wheel 131 from being locked. During the control in which the cylinder pressure of the second front wheel cylinder 136 is decreased by performing the close control of the holding valve 24 and the opening control of the pressure reducing valve 25, the brake working liquid of the second front wheel cylinder 136 is returned to the reservoir 23 by way of the pressure reducing valve 25 which is under the open control, and the brake working liquid which is returned to the reservoir 23 is sucked and supplied to the rear master cylinder 204 under pressure by the circulating pump 32.
Accordingly, to the second front brake working liquid pressure path 109 and the rear brake working liquid pressure path 208, the pressure of the brake working liquid which is supplied to the rear master cylinder 204 under pressure by the circulating pump 32 is added and hence, the sharp pressure increase is generated in the brake working liquid pressure of the rear master cylinder 204 in a state pressurized by the brake manipulation using the rear brake lever 205 (symbol RM in Fig. 3).

Here, the cylinder pressure (symbol CB) of the second front wheel cylinder 136 is controlled as follows. That is, the cylinder pressure CB is subject to the pressure reducing control, the holding control and the pressure increasing control due to the open/close control of the holding valve 24 and the open/close control of the pressure reducing valve 25 by the ECU 100 such that the speed difference between the vehicle body speed (symbol ST) and the wheel speed (symbol F) of the front wheel 131 becomes a fixed speed difference or less. On the other hand, the cylinder pressure (symbol RW) of the rear wheel cylinder 234 is controlled such that the open control and the close control of the holding valve 21 are repeatedly executed at a predetermined cycle by the ECU 100. That is, the brake working liquid pressure which is transmitted to the rear wheel cylinder 234 is intermittently pressurized (symbol EV) and hence, the sharp pressure increase (symbol RM) of the brake working liquid pressure of the rear master cylinder 204 is gradually pressurized in a distributed manner at a predetermined cycle.
Accordingly, it is possible to prevent the occurrence of the phenomenon that the sharp pressure increase of the brake working liquid pressure of the rear master cylinder 204 which is caused by the execution of the anti-lock brake control of the front wheel 131 at the time of performing the brake manipulation using the rear brake lever 205 is instantaneously applied to the rear wheel cylinder 234 to which the anti-lock brake control is not applied thus performing the braking which exceeds the brake manipulation feeling of a driver to the rear wheel 231.

Further, during a period in which the anti-lock brake control is applied only to the second front wheel cylinder 136, the ECU 100 repeatedly performs the open control and the close control of the holding valve 21 at a predetermined cycle at a stage (a predetermined time indicated by symbol P) in which the speed difference between the vehicle body speed (symbol ST) and the wheel speed (symbol R) of the rear wheel 231 is less than a predetermined speed difference (symbol VS), and holds the holding valve 21 in a close control state at a stage (symbol H) in which the anti-lock brake control of the second front wheel cylinder 136 is continued from a point of time that the speed difference between the vehicle body speed (symbol ST) and the wheel speed (symbol R) of the rear wheel 231 assumes the predetermined speed difference (symbol VS) or more.
Accordingly, it is possible to restrict the difference between the brake manipulation feeling of the driver with respect to a rear wheel 231 and the actual braking force to a fixed value or less and hence, it is possible to prevent the driver from feeling the braking force with respect to the rear wheel 231 which exceeds the brake manipulation feeling.

Here, by setting the above-mentioned predetermined speed difference (symbol VS) to a speed difference smaller than the speed difference with which the anti-lock brake control is performed with respect to the rear wheel 231, it is possible to prevent the discomfort in the brake manipulation feeling of the driver which is generated when the anti-lock brake control is performed with respect to the rear wheel 231 even when the brake manipulation state of the driver is fixed during the anti-lock brake control is performed only with respect to the second front wheel cylinder 136. Further, by performing a control which varies a ratio between an open control time (symbol P2) and the close control time (symbol P1) of the holding valve 21 at the time of repeatedly performing the open control and the close control of the holding valve 21 at a predetermined cycle in response to the vehicle body speed, it may be possible to perform the open/close control the holding valve 21 such that the cylinder pressure of the rear wheel cylinder 234 is pressurized with an optimum pressure increase ratio.

That is, one embodiment of the anti-lock brake control device according to the present invention includes, as described above, the first brake control means (the first wheel cylinder 136, the first holding valve 24, the first pressure reducing valve 25, the reservoir 23, the rear brake lever (manipulation element) 205, the first brake working liquid pressure path 109 and the like) which is arranged in the first brake system, the second brake control means (the second wheel cylinder 234, the second holding valve 21, the second pressure reducing valve 22, the reservoir 23, the rear brake lever (manipulation element) 205, the second brake working liquid pressure path 208 and the like) which is arranged in a second brake system, and the control device 101 which controls the first brake control means and the second brake control means, wherein in a state that the first brake control means and the second brake control means are in the operating state and, at the same time, during the period in which the first brake control means performs anti-lock brake control, the brake working liquid pressure which is transmitted to the second brake control means is intermittently pressurized by the control device 101.

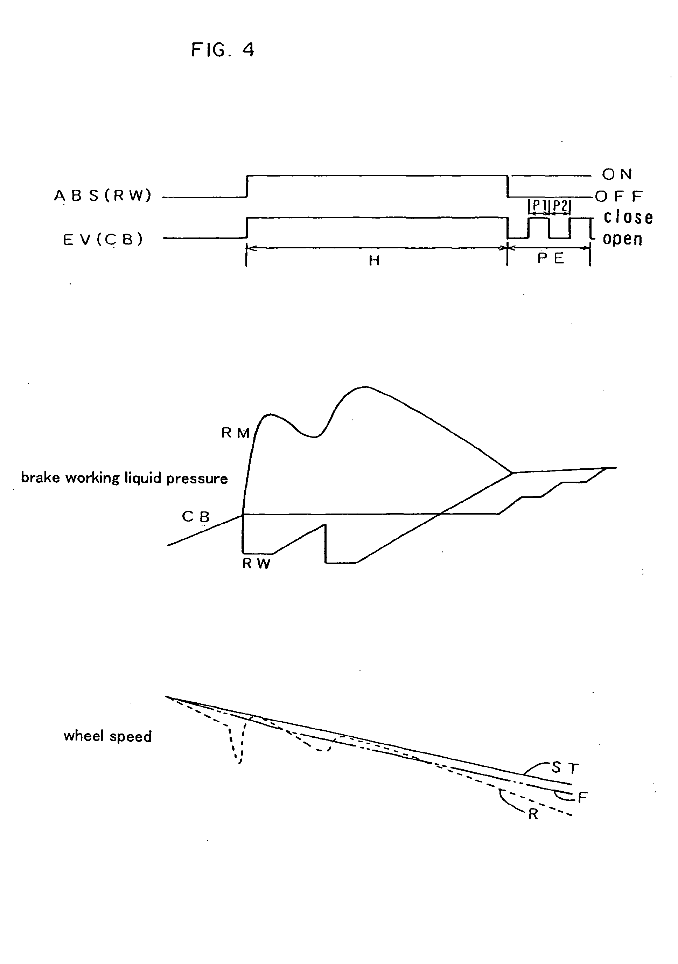

The anti-lock brake control of the rear front wheel cylinder 234 by the ECU 101 when the rear wheel 231 tends to be locked in a state that the front wheel brake and the rear wheel brake are simultaneously operated due to the brake manipulation using the rear brake lever 205 is explained in conjunction with Fig. 2 succeedingly and also in conjunction with Fig. 4 when necessary.

Fig. 4 is a timing chart of anti-lock brake control and views showing change curves of brake working liquid pressures of respective parts and the wheel speed curve with respect to the vehicle body speed when the rear wheel 231 tends to be locked in a state that the front wheel brake and the rear wheel brake are simultaneously operated.
Symbol ABS (RW) in the timing chart indicates timing of the anti-lock brake control with respect to the rear wheel cylinder 234, wherein an ON state is a state in which the anti-lock brake control is performed with respect to the rear wheel cylinder 234. Further, symbol EV (CB) indicates open/close control timing of the holding valve 24 which is arranged in the second brake working liquid pressure path 109, wherein an open state is a state in which the rear master cylinder 204 and the second front wheel cylinder 136 are communicated with each other.

With respect to the change curves of the brake working liquid pressures, the curve represented by symbol RW indicates the cylinder pressure of the rear wheel cylinder 234, the curve represented by symbol RM indicates the brake working liquid pressure of the rear master cylinder 204, and the curve represented by symbol CB indicates the cylinder pressure of the second front wheel cylinder 136.

To explain the wheel speed curves with respect to the vehicle body speed, a straight line represented by symbol ST indicates the vehicle body speed, the curve represented by symbol F indicates the wheel speed of the front wheel 131 and the curve represented by symbol R indicates the wheel speed of the rear wheel 231.

When the rear wheel 231 tends to be locked at the time of performing the brake manipulation using the rear brake lever 205, in response to the control from the ECU 101, the holding valve 21 and the pressure reducing valve 22 are energized. The holding valve 21 assumes a closed state from a normally open state and the pressure reducing valve 22 assumes an open state from a normally closed state. Since the holding valve 21 is closed and the pressure reducing valve 22 is opened, the brake working liquid pressure of the rear master cylinder 204 and the cylinder pressure of the rear wheel cylinder 234 are interrupted from each other. The cylinder pressure of the rear wheel cylinder 234 is reduced since the brake working liquid is temporarily stored in the reservoir 23 via the pressure reducing valve 22. Here, the DC motor 31 is also energized simultaneously and hence, the brake working liquid which is temporarily stored in the reservoir 23 is sucked and returned to the rear master cylinder 204 by the circulating pump 32. Then, the cylinder pressure of the rear wheel cylinder 234 is subject to the pressure reducing control in a state that the cylinder pressure of the rear wheel cylinder 234 is completely separated from the brake working liquid pressure of the rear master cylinder 204.

When the cylinder pressure of the rear wheel cylinder 234 assumes an optimum value, in response to the control from the ECU 101, the pressure reducing valve 22 is de-energized and hence, the pressure reducing valve 22 assumes a closed state. Then, due to the closing of the pressure reducing valve 22, the cylinder pressure of the rear wheel cylinder 234 and the reservoir 23 are interrupted from each other and hence, the cylinder pressure of the rear wheel cylinder 234 is held. That is, since both of the holding valve 21 and the pressure reducing valve 22 are closed, the cylinder pressure of the rear wheel cylinder 234 assumes the brake working liquid pressure which is controlled and held by the ECU 101 and assumes an independent state separated from the brake working liquid pressure of the rear master cylinder 204 pressurized by the brake manipulation using the rear brake lever 205.

Then, when it is necessary to increase the cylinder pressure of the rear wheel cylinder 234, in response to the control from the ECU 101, the holding valve 21 is de-energized and hence, the holding valve 21 assumes an open state. Due to the opening of the holding valve 21, the brake working liquid pressure of the rear master cylinder 204 and the cylinder pressure of the rear wheel cylinder 234 are communicated with each other and hence, a state which is equal to a state at the time of performing the usual braking is established. That is, due to the brake working liquid pressure of the rear master cylinder 204 which is pressurized by the brake manipulation using the rear brake lever 205, the cylinder pressure of the rear wheel cylinder 234 is increased.

In this manner, the ECU 100, at the time of performing the brake manipulation using the rear brake lever 205, controls the cylinder pressure of the rear wheel cylinder 234 by performing the open/close control of the holding valve 21 and the pressure reducing valve 22 so as to prevent the rear wheel 231 from being locked. During the control in which the cylinder pressure of the rear wheel cylinder 234 is decreased by performing the close control of the holding valve 21 and the opening control of the pressure reducing valve 22, the brake working liquid of the rear wheel cylinder 234 is returned to the reservoir 23 by way of the pressure reducing valve 22 which is under the open control, and the brake working liquid which is returned to the reservoir 23 is sucked and supplied to the rear master cylinder 204 under pressure by the circulating pump 32.
Accordingly, to the second front brake working liquid pressure path 109 and the rear brake working liquid pressure path 208, the pressure of the brake working liquid which is supplied to the rear master cylinder 204 under pressure by the circulating pump 32 is added and hence, the sharp pressure increase is generated in the brake working liquid pressure of the rear master cylinder 204 in a state pressurized by the brake manipulation using the rear brake lever 205 (symbol RM in Fig. 4).

Here, the cylinder pressure (symbol RW) of the rear wheel cylinder 234 is controlled as follows. That is, the cylinder pressure RW is subject to the depressurizing control, the holding control and the pressurizing control due to the open/close control of the holding valve 21 and the open/close control of the pressure reducing valve 22 by the ECU 100 such that the speed difference between the vehicle body speed (symbol ST) and the wheel speed (symbol R) of the rear wheel 231 becomes a fixed speed difference or less. On the other hand, since the holding valve 24 is held in a close control state by the ECU 100 (symbol EV) during a period in which the anti-lock brake control is performed only with respect to the rear wheel cylinder 234, the sharp pressure increase (symbol RM) of the brake working liquid pressure of the rear master cylinder 204 is not added to the cylinder pressure (symbol CB) of the second front wheel cylinder 136 and hence, the cylinder pressure CB is held at the cylinder pressure at this point of time (stage indicated by symbol H).

Accordingly, it is possible to prevent the occurrence of the phenomenon that the sharp pressure increase of the brake working liquid pressure of the rear master cylinder 204 which is caused by the execution of the anti-lock brake control of the rear wheel 231 at the time of performing the brake manipulation using the rear brake lever 205 is instantaneously applied to the second front wheel cylinder 136 to which the anti-lock brake control is not applied thus performing the braking which exceeds the brake manipulation feeling of a driver to the front wheel 131.

Further, although it is no more possible to further increase the cylinder pressure of the second front wheel cylinder 136 by holding the holding valve 24 in a close control state, the braking of the front wheel 131 can be performed by pressurizing the first front wheel cylinder 134 by performing the brake manipulation using the front brake lever 104 as mentioned above and hence, it is possible to maintain a state in which the braking of the front wheel 131 can be performed.

Further, the ECU 100, during a period in which the anti-lock brake control is performed only with respect to the rear wheel cylinder 234, holds the holding valve 24 in a close control state and, thereafter, repeats the open control and the close control of the holding valve 24 for a fixed time (a stage indicated by symbol PE) at a predetermined cycle from a point of time that the anti-lock brake control of the rear wheel cylinder 234 is not performed and, thereafter, holds the holding valve 24 in the open control state (symbol EV). By repeating the open control and the close control of the holding valve 24 for the fixed time at the predetermined cycle, the large pressure difference between the brake working liquid pressure of the rear master cylinder 204 and the cylinder pressure of the second front wheel cylinder 136 which is generated during the period in which the holding valve 24 is held in a close control state (a stage indicated by symbol H) can be gradually decreased at the predetermined cycle.

Due to such a manner of operation, at a point of time at which the anti-lock brake control of the rear wheel cylinder 234 is not performed, the cylinder pressure of the second front wheel cylinder 136 which is pressurized by the brake working liquid pressure of the rear master cylinder 234 can be gradually elevated. Accordingly, it is possible to prevent the occurrence of the phenomenon that at the point of time that the anti-lock brake control of the rear wheel cylinder 234 is not performed, the cylinder pressure of the second front wheel cylinder 136 is sharply elevated thus giving the discomfort in brake manipulation feeling to a driver.

Further, by performing control which varies a ratio between an open control time (symbol P2) and the close control time (symbol P1) of the holding valve 24 at the time of repeatedly performing the open control and the close control of the holding valve 24 at a predetermined cycle in response to the vehicle body speed, it may be possible to perform the open/close control of the holding valve 21 such that the cylinder pressure of the rear wheel cylinder 234 is pressurized with an optimum pressure increase ratio.

In this manner, in the motorcycle-use anti-lock brake system 100, the discomfort in brake manipulation feeling of the driver on the rear wheel 231 which is generated due to the braking which exceeds the brake manipulation feeling applied to the rear wheel 231 at the time of performing the brake manipulation using the rear brake lever 205 can be decreased without arranging a delay valve in the rear brake working liquid pressure path 208.

As another embodiment, in the above-mentioned motorcycle-use anti-lock brake system 100, at a point of time that the anti-lock brake control of the second front wheel cylinder 136 is no more performed from a state that the anti-lock brake control is performed only with respect to the second front wheel cylinder 136, the open control and the close control of the holding valve 21 may be repeated at a predetermined cycle for a fixed time and, thereafter, the holding valve 21 may be held in an open control state.

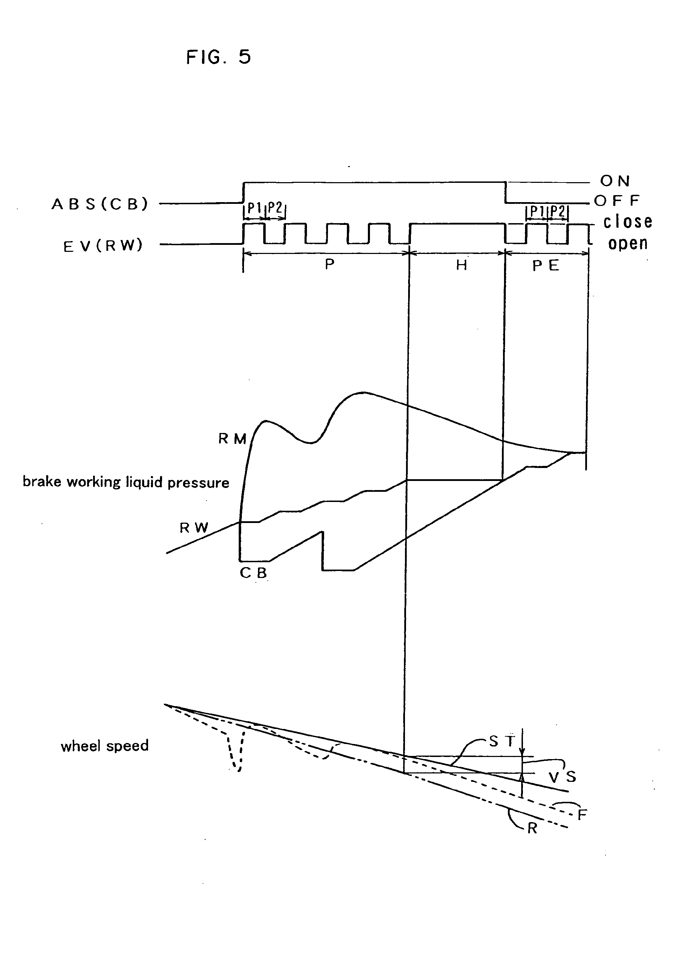

Fig. 5 is a timing chart of anti-lock brake control and views showing change curves of brake working liquid pressures of respective parts and a wheel speed curve with respect to a vehicle body speed of a second embodiment when a front wheel 131 tends to be locked in a state that a front wheel brake and a rear wheel brake are simultaneously operated in a second embodiment. Here, respective symbols of the timing chart, the change curves of the brake working liquid pressures and the wheel speed curve with respect to a vehicle body speed are substantially equal to those symbols used in Fig. 3 and hence, their explanation is omitted and the explanation of parts substantially equal to the corresponding parts of the first embodiment shown in Fig. 3 is omitted.

The ECU 100, during a period in which the anti-lock brake control is performed only with respect to a second front wheel cylinder 136, repeatedly performs an open control and a close control of a holding valve 21 in a stage (a time indicated by symbol P) in which the speed difference between a vehicle body speed (symbol ST) and a wheel speed (symbol R) of a rear wheel 231 is below a predetermined speed difference (symbol VS), and holds the holding valve 21 in a close control state in a stage (symbol H) in which the anti-lock brake control of the second front wheel cylinder 136 is continued from a point of time that the speed difference between the vehicle body speed (symbol ST) and the wheel speed (symbol R) of the rear wheel 231 becomes equal to or above the predetermined speed difference (symbol VS).
Then, at a point of time that the anti-lock brake control of the second front wheel cylinder 136 is not performed from the state in which the holding valve 21 is held in the close control state, an open control and a close control of the holding valve 21 is repeated at a predetermined cycle for a fixed time (a stage indicated by symbol PE) and, thereafter, the holding valve 21 is held in the open control state (symbol EV).

By repeating the open control and the close control of the holding valve 21 at the predetermined cycle for the fixed time after holding the holding valve 21 in the close control state and before turning the holding valve 21 into the open control state, the large pressure difference between the brake working liquid pressure of the rear master cylinder 204 which is generated during the period (the stage indicated by symbol H) in which the holding valve 21 is held in the close control state can be gradually decreased at the predetermined cycle.

Due to such a manner of operation, at a point of time at which the anti-lock brake control of the second front wheel cylinder 136 is not performed, the cylinder pressure of the rear wheel cylinder 234 which is pressurized by the brake working liquid pressure of the rear master cylinder 204 can be gradually elevated. Accordingly, it is possible to prevent the occurrence of the phenomenon that at the point of time that the anti-lock brake control of the second front wheel cylinder 136 is not performed, the cylinder pressure of the rear wheel cylinder 234 is sharply elevated thus giving the discomfort in brake manipulation feeling to a driver.

Further, as another embodiment, in the same manner as the control of the cylinder pressure of the rear wheel cylinder 234 in the state in which the anti-lock brake control is performed with respect to the second front wheel cylinder 136 as described in the above-explained first embodiment and the second embodiment, the cylinder pressure of the second front wheel cylinder 136 in the state that the anti-lock brake control is performed with respect to the rear wheel cylinder 234 may be controlled.
Here, it is needless to say that the present invention is not limited to the above-mentioned embodiments and various modifications are conceivable within a scope of the present invention described in claims and these modifications also fall within the scope of the present invention.

### Industrial Applicability

The present invention is applicable to the anti-lock brake control device of the automobile having two or more wheels and the motorcycle and can bring about the manner of operation and advantageous effects of the present invention to the anti-lock brake system which is provided to the anti-lock brake control device.

### Brief Description of the Drawings

Fig. 1 is a schematic block diagram showing the system constitution of a motorcycle-use anti-lock brake system according to the present invention;
Fig. 2 is a schematic constitutional view of a hydraulic unit according to the present invention;
Fig. 3 is a timing chart of anti-lock brake control and views showing change curves of brake working liquid pressures of respective parts and a wheel speed curve with respect to a vehicle body speed in a first embodiment when a front wheel tends to be locked in a state that a front wheel brake and a rear wheel brake are simultaneously operated.
Fig. 4 is a timing chart of anti-lock brake control and views showing change curves of brake working liquid pressures of respective parts and a wheel speed curve with respect to a vehicle body speed in a first embodiment when a rear wheel tends to be locked in a state that a front wheel brake and a rear wheel brake are simultaneously operated.
Fig. 5 is a timing chart of anti-lock brake control and views showing change curves of brake working liquid pressures of respective parts and a wheel speed curve with respect to a vehicle body speed in a second embodiment when a front wheel tends to be locked in a state that a front wheel brake and a rear wheel brake are simultaneously operated in a second embodiment.

## Claims

1. An anti-lock brake control device comprising a first brake control means which is arranged in a first brake system, a second brake control means which is arranged in a second brake system, and a control device which controls the first brake control means and the second brake control means, wherein
in a state that the first brake control means and the second brake control means are in an operating state and, at the same time, the first brake control means performs anti-lock brake control, a brake working liquid pressure which is transmitted to the second brake control means is intermittently pressurized by the control device.

2. An anti-lock brake control device according to claim 1, wherein the brake working liquid pressure which is intermittently pressurized is gradually pressurized in a distributed manner.

3. An anti-lock brake control device according to claim 1 or 2, wherein the intermittent pressurizing of the brake working liquid pressure is performed within a predetermined time in which at least the first brake control means performs the anti-lock brake control.

4. An anti-lock brake control device according to claim 3, wherein the anti-lock brake control device is provided with a liquid pressure unit which includes a control valve which is operated in response to a control signal from the control device along with an operation of manipulation elements which are arranged in the first brake system and the second brake system, and the predetermined time is a time from a point of time that the anti-lock brake control is started to a point of time the speed difference between a vehicle body speed and a wheel speed of a wheel which is to be braked in the second brake system is set to a value below a predetermined speed difference.

5. An anti-lock brake control device comprising:
a first brake force applying means which applies a brake force to a first wheel;
a second brake force applying means which applies a brake force to a second wheel;
a first brake working liquid pressure path which transmits a brake working liquid pressure of a master cylinder which is increased or decreased by operating a manipulation element to the first brake force applying means;
a second brake working liquid pressure path which transmits the brake working liquid pressure of the master cylinder to the second brake force applying means by operating the manipulating element;
a first holding valve which is capable of opening and closing the first brake working liquid pressure path;
a second holding valve which is capable of opening and closing the second brake working liquid pressure path;
a first pressure reducing valve which is capable of opening and closing a communication path between the first brake force applying means and a reservoir of the master cylinder;
a second pressure reducing valve which is capable of opening and closing a communication path between the second brake force applying means and the reservoir;
a brake working liquid recovering means which returns the brake working liquid in the reservoir to the master cylinder after pressurizing the brake working liquid; and
a control device which controls operations of the first holding valve, the second holding valve, the first pressure reducing valve, the second pressure reducing valve and the brake working liquid recovering means, wherein
during a period in which an anti-lock brake control is applied to the first wheel or the second wheel, due to the control device, the second holding valve or the first holding valve which is provided to the brake working liquid pressure path for transmitting the brake working liquid pressure to the second wheel or the first wheel is intermittently opened and closed.

6. An anti-lock brake control device according to claim 1 or claim 5, wherein the anti-lock brake control device is mounted on a two-wheeled vehicle which includes an interlocking brake device which is capable of transmitting the brake working liquid pressure to both of the front wheel and the rear wheel using one manipulation element.

7. An anti-lock brake system which includes the anti-lock brake control device described in any one of claims 1 to 6.
